Europäisches Patentamt

European Patent Office

Office européen des brevets

(11) Publication number: **0 044 137**
**B1**

## EUROPEAN PATENT SPECIFICATION

(45) Date of publication of patent specification: **12.02.86**

(51) Int. Cl.⁴: **B 62 D 55/28**

(21) Application number: **81302624.2**

(22) Date of filing: **12.06.81**

(54) Track link for a tracked vehicle.

(30) Priority: **14.07.80 GB 8022932**

(43) Date of publication of application:
**20.01.82 Bulletin 82/03**

(45) Publication of the grant of the patent:
**12.02.86 Bulletin 86/07**

(84) Designated Contracting States:
**CH DE FR LI**

(56) References cited:
**DE-B-1 605 507**
**DE-U-7 046 202**
**GB-A-1 405 742**
**US-A-3 266 853**
**US-A-3 339 987**

(73) Proprietor: **The Secretary of State for Defence in Her Britannic Majesty's Government of The United Kingdom of Great Britain and Northern Ireland Whitehall**
**London SW1A 2HB (GB)**

(72) Inventor: **Parker, Robert Anthony**
**1 Foxhill Crescent The Maltway**
**Camberley Surrey (GB)**

(74) Representative: **Gunning, William John et al**
**Procurement Executive, Ministry of Defence Patents 1A(4), Room 1932 Empress State Building Lillie Road**
**London SW6 1TR (GB)**

Courier Press, Leamington Spa, England.

## Description

This invention relates to a track link for a tracked vehicle, the link being of the type having a detachable ground engagement pad according to the preamble of claim 1. Such a track link is described in US—A—3266853 for example.

Various types of ground engagement pads are known, most of which comprise a resilient pad bonded to a metal bearer plate. The bearer plate may be directly bolted to the track link or, where speedy replacement is required, the plate may be shaped so as to slide into a channel having two opposing grooves, herein referred to as a slideway, in the track link where it may be secured against an end stop either by screw fixing means or by a resilient look, as described in GB—A—1 405 742 for example.

When driven over uneven ground, track links are subjected to considerable stresses and dimensional variations which can be sufficient to dislodge a slidable bearer plate from its slideway. A known solution to this problem is to provide the bearer plate with sufficient lateral elasticity to accommodate fluctuations in the separation of the two opposed grooves.

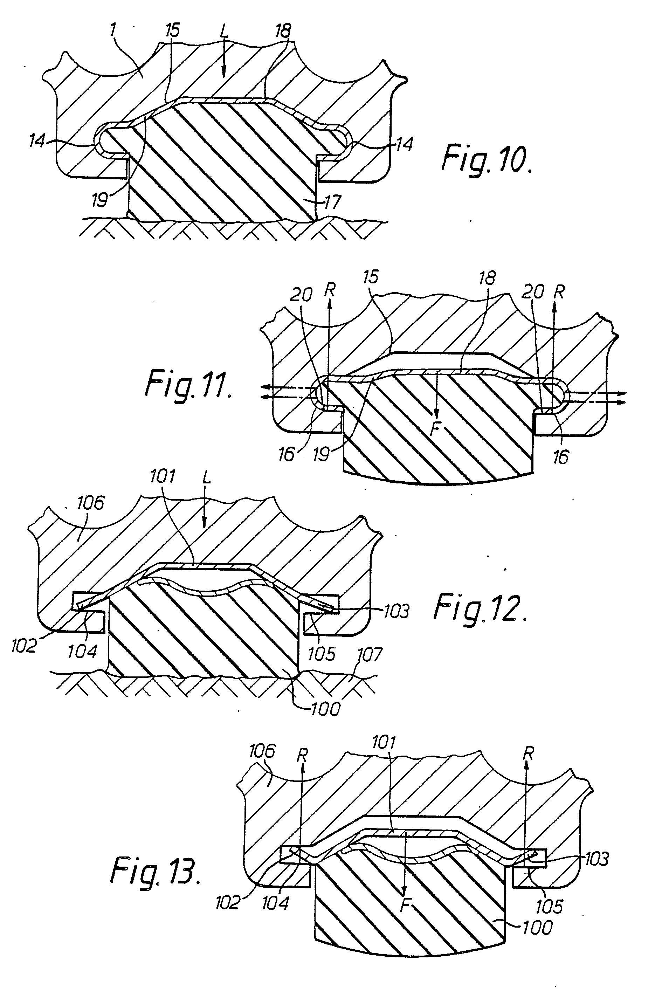

One example of this solution, is disclosed in US—A—3266853, and will be described here with reference to Figure 12 of the drawings accompanying the present specification. In this solution a resilient pad 100 is attached to a bearer plate 101 of bowed cross-sectional configuration extending into two lateral engagement flanges 102 and 103 which engage with the two opposed grooves 104 and 105 of a track link 106. A load L supported by the pad 106 in engagement with the ground 107 acts to extend the pad and plate laterally to engage the flanges more fully with the grooves.

A further problem arises in use with high speed tracked vehicles however, as a result of the extreme centrifugal forces to which a track link can be subjected when it changes direction of travel at the upper leading end of the track, its forward velocity then being abruptly reduced from twice the speed at which the vehicle is travelling, to zero. The centrifugal force generated at that moment can be of the order of 150 g for a vehicle travelling at 35 to 40 miles per hour (appr. 50 to 65 km per hour) and when a flanged bearer plate of the aforementioned type is subjected to such an outwardly acting centrifugal force F (see Figure 13 of the accompanying drawings), the whole bearer plate is forced outwards, pressing the engagement flanges 102 and 103 against the lower (as drawn) faces of the grooves 104 and 105. The inwardly acting reactive force R thereby engendered tends to deflect the flanges inwardly by leverage about the edge of the reactive surface. Any inward deflection of these flanges that occurs during application of the force F remains as a permanent distortion when the force is removed as there are no restoring forces inherent to the bearer plate. Consequently, the distortion is incremental for each application of centrifugal force F, i.e., every time the track link reverses direction at the upper leading edge of the track. In time, the flanges can suffer sufficient inward deflection to become disengaged from the grooves, and the whole plate, together with its resilient pad, is flung out.

The present invention seeks to provide a track link having a slidable ground engagement pad which will not readily disengage from the link under the action of centrifugal forces. The solution of the problem is effected by the features according to the characterising portion of claim 1.

Accordingly the present invention comprises a track link for a tracked vehicle, having a ground opposable face containing at least one slideway and including a load bearing shell of bowed cross sectional configuration longitudinally insertable into the slideway and supporting a resilient ground engagement pad disposed so as to protrude outwardly from the ground opposable face when the shell is located in the slideway; characterised in that the shell has in-turned longitudinal edges defining a partially enclosed interior surface and a reflex exterior surface, which exterior surface is engagable with the slideway at an inner bearing interface substantially parallel with the ground opposable face and at each of a co-planar pair of outer bearing interfaces parallel with and opposed to the inner bearing interface, the resilient ground engagement pad being secured to the partially enclosed interior surface of the shell.

For maximum resistance of the pad to shear encountered in use, the slideway is preferably disposed transversely to the direction of motion of the track link.

Both the slideway and the load bearing shell may be parallel sided and provided with co-operative stops which abut when the shell is fully inserted in the slideway. Alternatively both may be slightly tapered so as to interlock only when the shell is fully inserted in the slideway, with the advantage of greater ease of insertion and withdrawal.

Preferably, fastening means are also provided to retain the shell in the fully inserted position, which means may comprise a screw fastener or a snap lock.

Preferably the in-turned longitudinal edges of the shell are C-form to provide the necessary bearing surfaces at both inner and outer interfaces with the slideway, and the shell may conveniently comprise a longitudinal part-cylinder or part-cone of flattened, basically elliptical cross-section, locatable in the slideway with its major axial plane disposed parallel with the ground opposable face.

The load bearing shell may be a metal such as steel or plastics material such as nylon, either of which may be bonded directly to a rubber or elastomeric ground engagement pad. Alternatively the shell may itself be of hard rubber or elastomer, moulded integrally with a pad of similar but softer material.

Embodiments of the invention will now be described by way of example only with reference to the following drawings of which

Figure 1 is a perspective view of a track link having twin parallel-sided slideways, each fitted with a load bearing shell and a ground engagement pad,

Figures 2, 3 and 4 are end, underside and side views respectively of the load bearing shell illustrated in Figure 1.

Figures 5 to 8 are underside, top and both end views respectfully of an alternative, tapered load bearing shell suitable for use in a correspondingly tapered slideway,

Figure 9 is a section on line IX—IX of Figure 5,

Figures 10 and 11 are cross-sectional representations of the load bearing shell of Figure 1 drawn in load-bearing and centrifugally stressed condition respectively, and

Figures 12 and 13 are cross-sectional representations of a prior-art bearer plate drawn in load-bearing and centrifugally stressed condition respectively.

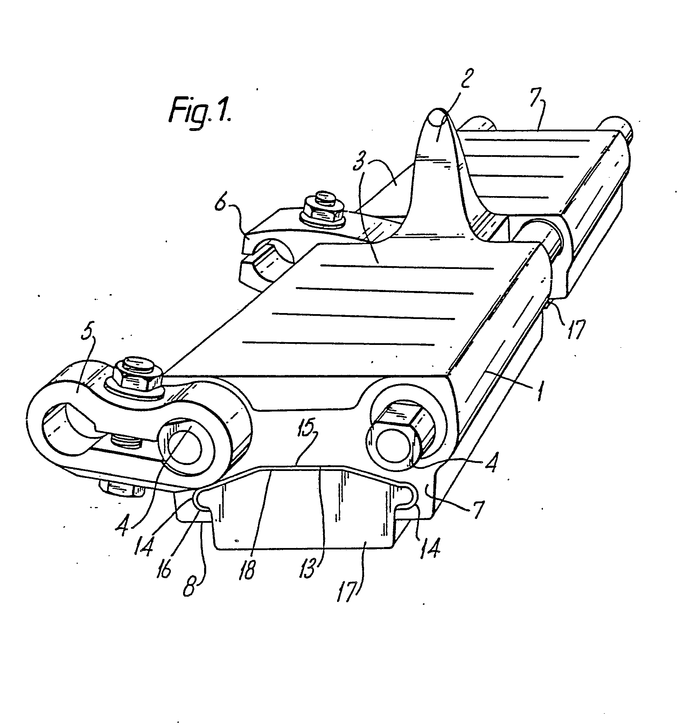

The track link 1 illustrated in Figure 1 has a central horn 2, wheel paths 3, rubber bushed pins 4, end and centre connectors 5 and 6 for coupling to a further pin 4 of an adjoining similar link (not shown), opposing end faces 7, and a ground opposable face 8.

The face 8 is provided with two identical parallel-sided slideways 13, axially aligned and accessible one from each end face 7, each having opposed retaining grooves 14, an inner bearing surface 15 and outer bearing surfaces 16. Located in each slideway 13 is a rubber ground engagement pad 17 encased at its slideway-adjacent surfaces in a steel, load bearing shell 18.

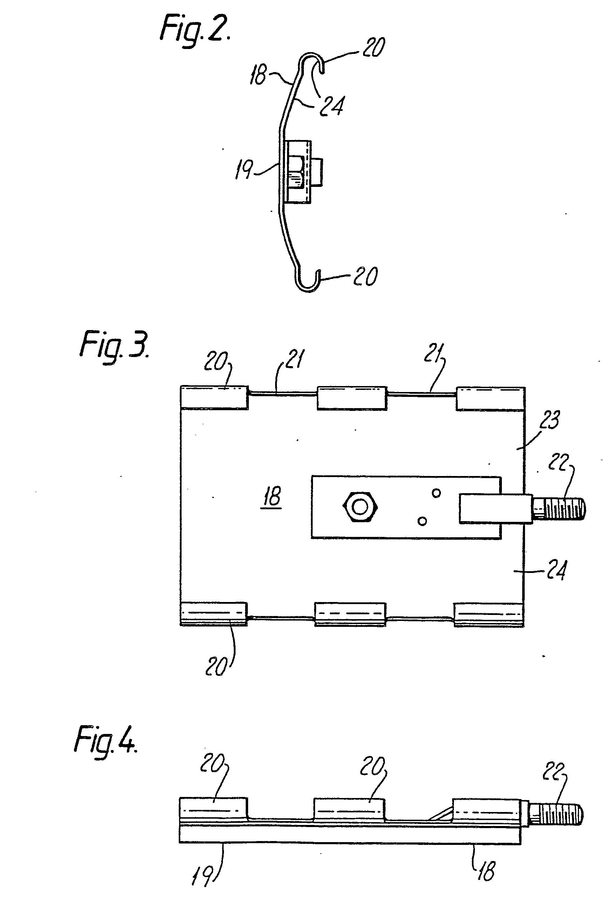

The load bearing shell 18, which is illustrated in detail in Figures 2, 3 and 4, is a flattened, longitudinal part-cylinder having an inner bearing surface 19 adjacent the inner bearing surface 15 and outer bearing surfaces 20 adjacent the outer bearing surfaces 16. Gaps 21 provided in the bearing surfaces 20 enable the weight of the shell to be reduced without serious impairment of its function. An axial stub screw 22 is attached to the leading end 23 of the shell 18, and the pad 17 (Figure 1) is bonded to the internal surface 24 of the shell. The complete assembly is inserted, end 23 first, into the slideway 13 until the screw 22 locates in a clearance hole (not shown) at the far end of the slideway where it can be secured with nuts (not shown).

In operation, when the pads 17 are in engagement with the ground and the track link 1 is bearing the weight of a supported vehicle as illustrated in Figure 10, the load L of the vehicle is transmitted to the ground via the interface of inner bearing surfaces 15 and 19 of each slideway 13 and shell 18 respectively. When the link is no longer bearing the weight of the vehicle and is being subjected to a centrifugal force F acting outwardly from the link 1 through the pad 17 as shown in Figure 11, the outer bearing surfaces 20 of the shell 18 are forced against the outer bearing surfaces 16 of the slideway 13 thereby generating a reactive force R which co-acts with opposing force F to compress the reflex bowed configuration of the shell, thus causing the inner bearing surfaces 15 and 19 to separate and the lateral extremities of the shell to extend outwardly to engage more forcibly in the retaining grooves 14. This compression of the shell additionally enhances the grip of the in-turned lateral edges upon the contained portion of the resilient pad. When the force F is removed, this shell, unlike the prior art bearer plate previously discussed with respect to Figures 12 and 13, is restored to its original shape by the spring action of the reflex bowed configuration with the result that there is no incremental distortion at each application of centrifugal force.

In essence, the inwardly acting reactive force R which acts disadvantageously upon the flanged bearer plate of the prior art to disengage it from the slideway, has been turned to advantage in the present invention by reflexing the edges of the bowed shell back through 180°, thereby causing the reactive force R to increase engagement with the slideway.

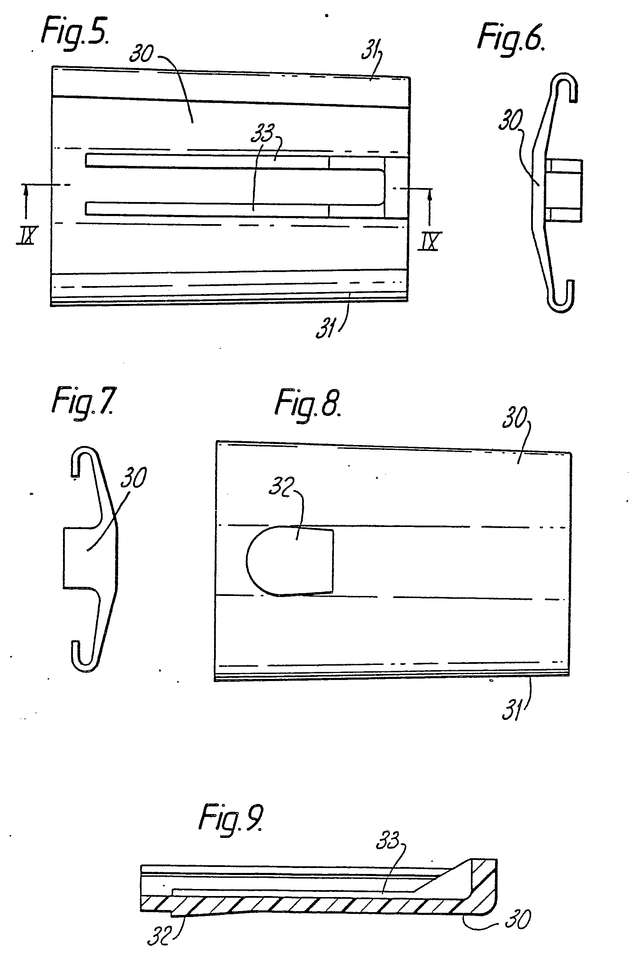

An alternative load bearing shell 30 in accordance with the present invention, having tapered edges 31 for insertion in a correspondingly tapered slideway (not shown), is illustrated in Figures 5 to 9. This load bearing shell is integrally moulded in nylon and reacts in operation with its slideway in exactly the same manner as that described for the preceding embodiment.

The shell 30 is provided with a locking tongue 32 centred at the apex of the bowed configuration, which causes the shell to compress inwardly whilst being pushed along the slideway until the shell and slideway tapers are fully engaged, whereupon the tongue snaps outwardly into engagement with a corresponding aperture (not shown) in the slideway. Axial ribs 33 provide reinforcement of the tongue 32 in its condition of engagement with the slideway. Obviously, the parallel-sided shell of Figure 1 could be of similar construction.

An additional advantage of the bowed configuration of the load bearing shell of this invention is that its inherent flexibility permits its insertion into a cast slideway requiring no expensive machining.

The invention further provides an appreciable saving in weight over conventional bolt-on-bearer plates and, in the case of the nylon shell, a considerable cost saving.

**Claims**

1. A track link for a tracked vehicle, having a ground opposable face (8) containing at least one slideway (13) and including a load bearing shell (18) of bowed cross-sectional configuration longitudinally insertable into the slideway and supporting a resilient ground engagement pad (17) disposed so as to protrude outwardly from the ground opposable face when the shell is located in the slideway; characterised in that the shell (18) has in-turned longitudinal edges defining a partially enclosed interior surface and a reflex exterior surface, which exterior surface is engageable with the slideway (13) at an inner bearing interface (15/19) substantially parallel with the ground opposable face (8) and at each of a co-planar pair of outer bearing interfaces (16/20) parallel with and opposed to the inner bearing interface (15/19), the resilient ground engagement pad (17) being secured to the partially enclosed interior surface of the shell.

2. A track link as claimed in Claim 1 characerised in that the in-turned edges of the load bearing shell (18) each have a C-form cross-section.

3. A track link as claimed in either of the preceding claims characterised in that the slideway (13) and the load bearing shell (18) are both parallel-sided and provided with co-operative stops which abut when the shell is fully inserted in the slideway.

4. A track link as claimed in either of Claims 1 and 2 characterised in that the slideway (13) and the load bearing shell (30) are correspondingly tapered so as to engage fully only when the shell is fully inserted in the slideway.

5. A track link as claimed in any of the preceding claims characterised in having fastening means (22) for retaining the load bearing shell in the fully inserted position within the slideway.

6. A track link as claimed in Claim 5 characerised in that the fastening means is a screw fastener (22).

7. A track link as claimed in Claim 5 characerised in that the fastening means is a snap lock (32).

8. A track link as claimed in any of the preceding claims characterised in that the load bearing shell is integrally moulded with the ground engagement pad.

**Revendications**

1. Maillon de chenille de véhicule, ayant une face (8) tournée vers le sol contenant au moins une glissière (13) et comprenant une enveloppe (18) d'encaissement de force ayant une configuration bombée en coupe, pouvant être introduite longitudinalement dans la glissière et supportant un patin élastique (17) de contact avec le sol disposé de manière qu'il dépasse vers l'extérieur de la face tournée vers le sol lorsque l'enveloppe est positionnée dans la glissière, caractérisé en ce que l'enveloppe (18) a des bords longitudinaux repliés vers l'intérieur, délimitant une surface interne partiellement fermée et une surface externe flèchie, la surface externe étant destinée à coopérer avec la glissière (13) à une interface interne d'appui (15/19) en direction sensiblement parallèle à la face tournée vers le sol (8) et à chacune de deux interfaces externes coplanaires d'appui (16/20) parallèles à l'interface interne d'appui (15/19) et en face de cette interface, le patin élastique (17) de contact avec le sol étant fixé à la surface interne partiellement fermée de l'enveloppe.

2. Maillon de chenille selon la revendication 1, caractérisé en ce que les bords repliés vers l'intérieur de l'enveloppe (18) d'encaissement de force ont chacun une section en C.

3. Maillon de chenille selon l'une quelconque des revendications précédentes, caractérisé en ce que la glissière (13) et l'enveloppe (18) d'encaissement de force ont toutes deux des côtés parallèles et ont des buttées complémentaires qui sont en coopération lorsque l'enveloppe est totalement introduite dans la glissière.

4. Maillon de chenille selon l'une des revendications 1 et 2, caractérisé en ce que la glissière (13) et l'enveloppe (30) d'encaissement de force sont évasées de manière correspondante afin qu'elles ne coopèrent pleinement que lorsque l'enveloppe est totalement introduite dans la glissière.

5. Maillon de chenille selon l'une quelconque des revendications précédentes, caractérisé en ce qu'il comporte un dispositif de fixation (22) destiné à retenir l'enveloppe d'encaissement de force dans sa position totalement introduite dans la glissière.

6. Maillon de chenille selon la revendication 5, caractérisé en ce que le dispositif de fixation est un organe de fixation fileté (22).

7. Maillon de chenille selon la revendication 5, caractérisé en ce que le dispositif de fixation est un verrou à enclenchement élastique (32).

8. Maillon de chenille selon l'une quelconque des revendications précédentes, caractérisé en ce que l'enveloppe d'encaissement de force est moulée en une. seule pièce avec le patin de contact avec le sol.

**Patentansprüche**

1. Kettenglied für ein Raupenketten-Fahrzeug mit einer dem Boden gegenüberstellbaren Fläche (8), die mindestens eine Bettbahn (13) und eine Trägerhülse (18) aufweist, die einen bogenförmigen Querschnitt hat und längs in die Bettbahn einschiebbar ist und ein elastisches Glied (17), das mit dem Boden in Berührung gebracht wird, trägt, das so angeordnet ist, daß es an der dem Boden gegenüberstellbaren Fläche hervorragt, wenn die Trägerhülse in der Bettbahn angeordnet ist, dadurch gekennzeichnet, daß die Trägerhülse (18) nach innen gekehrte Längskanten aufweist, die eine teilweise geschlossene innere Fläche und eine aufgebogene äußere Fläche bilden, wobei die äußere Fläche an einer inneren, im wesentlichen zu der dem Boden gegenüberstellbaren Fläche (8) parallelen Trägerzwischenfläche (15, 19) in die Bettbahn einfügbar ist, wobei das elastische Glied (17) an jeder Trägerzwischenfläche eines co-planaren Paares äußerer Trägerzwischenflächen (16, 20) befestigt ist, die parallel zu der inneren Trägerzwischenfläche (15, 19) und dieser gegenüber angeordnet sind, und wobei das elastische Glied (17) an der teilweise geschlossenen Innenfläche der Trägerhülse gesichert ist.

2. Kettenglied nach Anspruch, 1 dadurch gekennzeichnet, daß die nach innen gekehrten Kanten der Trägerhülse jeweils einen C-förmigen Querschnitt aufweisen.

3. Kettenglied nach Anspruch 1 oder 2, dadurch gekennzeichnet, daß die Bettbahn (13) und die Trägerhülse (18) beide parallele Seiten aufweisen und mit zusammenwirkenden Anschlägen versehen sind, die aneinanderstoßen, wenn die Trägerhülse vollständig in die Bettbahn eingeführt ist.

4. Kettenglied nach Anspruch 1 oder 2, dadurch gekennzeichnet, daß die Bettbahn (13) und die Trägerhülse (30) in sich entsprechender Weise konisch zulaufend ausgebildet sind, so daß sie erst vollständig ineinandergreifen, wenn die Trägerhülse vollkommen in die Bettbahn eingeführt ist.

5. Kettenglied nach einem der vorstehenden Ansprüche, gekennzeichnet durch Befestigungsmittel (22) zur Halterung der Trägerhülse in der vollständig eingeführten Stellung innerhalb der Bettbahn.

6. Kettenglied nach Anspruch 5, dadurch gekennzeichnet, daß das Befestigungsmittel eine Schraubbefestigung (22) ist.

7. Kettenglied nach Anspruch 5, dadurch gekennzeichnet, daß das Befestigungsmittel ein Schnappverschluß (32) ist.

8. Kettenglied nach einem der vorstehenden Ansprüche, dadurch gekennzeichnet, daß die Führungshülse vollständig mit dem mit dem Boden in Berührung bringbaren Glied vergossen ist.

Fig.1.

**Fig. 2.**

**Fig. 3.**

**Fig. 4.**

*Fig.5.*

*Fig.6.*

*Fig.7.*

*Fig.8.*

*Fig.9.*

Fig. 10.

Fig. 11.

Fig. 12.

Fig. 13.